# EUROPÄISCHE PATENTANMELDUNG

(11) **EP 3 370 127 A1**
(43) Veröffentlichungstag der Anmeldung: **05.09.2018**
(21) Anmeldenummer: 17158655.5
(22) Anmeldetag: 01.03.2017
(51) Int. Cl.: G05B 19/4069

(54) **VERFAHREN ZUM BETRIEB EINER PRODUKTIONS- ODER WERKZEUGMASCHINE, NACH DEM VERFAHREN ARBEITENDE PRODUKTIONS- ODER WERKZEUGMASCHINE UND COMPUTERPROGRAMM ALS IMPLEMENTIERUNG DES VERFAHRENS**

(71) Anmelder: Siemens Aktiengesellschaft, 80333 München (DE)
(72) Erfinder: Bitterolf, David, 91056 Erlangen (DE); Hamm, Carsten, 91330 Eggolsheim (DE); Reichel, Theo, 91301 Forchheim (DE)

(57) **Zusammenfassung**

Die Erfindung ist ein Verfahren zum Betrieb einer Produktions- oder Werkzeugmaschine (1), wobei zum Erhalt von Bewegungsdaten zum Beispiel mittels der Produktions- oder Werkzeugmaschine (1) ein Bauteil (2) bearbeitet wird, wobei aufgrund einer jeweiligen Spezifikation des Bauteils (2) eine Sollbahn (32) der Produktions- oder Werkzeugmaschine (1) und aufgrund der Bewegungsdaten eine Istbahn (34) der Produktions- oder Werkzeugmaschine (1) resultiert, wobei auf Basis der Bewegungsdaten automatisch eine Idealisierung oder gewünschte Verschlechterung vorgenommen wird und aufgrund der Idealisierung oder Verschlechterung eine Vergleichsbahn (36) der Produktions- oder Werkzeugmaschine (1) resultiert und wobei die Vergleichsbahn (36) automatisch mit der Istbahn (34) und/oder der Sollbahn (32) verglichen wird.

## Beschreibung

Die Erfindung betrifft ein Verfahren zum Betrieb einer Produktions- oder Werkzeugmaschine. Im Weiteren betrifft die Erfindung auch eine nach dem Verfahren arbeitende Vorrichtung, insbesondere eine nach dem Verfahren arbeitende Produktions- oder Werkzeugmaschine oder eine zur Steuerung und/oder Überwachung der Produktions- oder Werkzeugmaschine bestimmte Steuerungseinrichtung, die ansonsten ebenfalls nach dem hier vorgeschlagenen Verfahren arbeitet. Schließlich betrifft die Erfindung auch ein Computerprogramm als Implementierung des Verfahrens, welches beim Betrieb einer Produktions- oder Werkzeugmaschine ausgeführt wird.

Das Fertigungsergebnis bei der Herstellung eines Werkstücks auf einer NC-gesteuerten Werkzeugmaschine oder dergleichen hängt von der Art der Maschine, deren mechanischen Komponenten und der Güte der Maschinenoptimierung ab. Besonders bei einer fünfachsigen Bearbeitung mit drei kartesischen Achsen und zwei Rundachsen spielt zusätzlich auch die Kinematik der Maschine eine große Rolle. Die Auswirkungen hängen unter anderem von der konkreten Aufspannsituation des jeweiligen Werkstücks ab. Aufgrund der kinematischen Kopplung der Achsen führt eine kleine kartesische Verschiebung oft zu dramatisch anderen Bewegungsprofilen der NC-Achsen.

Heute sind die im Folgenden adressierten Zusammenhänge in Simulationsumgebungen für eine virtuelle Fertigung eines Werkstücks nicht berücksichtigt. Oftmals bleibt also nur die Herstellung und Begutachtung von Probeteilen. Es ist aber sofort und ohne Weiteres ersichtlich, dass dies in nachteiliger Art und Weise zeitaufwendig, ressourcenintensiv und kostenintensiv ist.

Aus der DE 103 52 815 B4 ist ein Simulationsverfahren für eine Bearbeitung eines Werkstücks durch eine Werkzeugmaschine bekannt. Dabei wird kurz gefasst als Simulationsprogramm die Steuerungssoftware der Steuerung der Werkzeugmaschine selbst verwendet. Im Rahmen der Simulation besteht dann zum Beispiel die Möglichkeit, die Zeitbasis anzupassen, so dass die Simulation im Vergleich zur Echtzeit schneller oder langsamer ablaufen und auch angehalten oder unterbrochen werden kann.

Eine Aufgabe der vorliegenden Erfindung besteht darin, eine im Vergleich zum Stand der Technik verbesserte Möglichkeit für eine Simulation einer Bearbeitung eines Werkstücks durch eine Werkzeugmaschine oder dergleichen anzugeben.

Die hier vorgeschlagene Neuerung kommt nicht nur für Werkzeugmaschinen, sondern allgemein für achsbasierte Maschinen in Betracht. Als Werkzeugmaschine werden bekanntlich alle Maschinen bezeichnet, die unter anderem im Maschinenbau und im Werkzeugbau zur Bearbeitung von Bauteilen (Rohteilen, Werkstücken) mit Werkzeugen dienen und zur Bewegung des jeweiligen Werkzeugs eine Mehrzahl von Maschinenachsen aufweisen. Zu den Werkzeugmaschinen gehören auch sogenannte NC- oder CNC-Maschinen. Ein Industrieroboter ist bekanntlich eine universelle, programmierbare Maschine mit einer Mehrzahl von Maschinenachsen, die neben einer Bearbeitung von Bauteilen alternativ auch zur Handhabung von Werkstücken und für Montagezwecke bestimmt und eingerichtet ist. Ein Industrieroboter ist ein Beispiel für eine hier als Produktionsmaschine bezeichnete allgemeine Bearbeitungsmaschine. Eine Werkzeugmaschine ist ein Beispiel für eine spezielle Bearbeitungsmaschine. Zwecks Erfassung aller Möglichkeiten von achsbasierten Maschinen, die zum Be- oder Verarbeiten von Bauteilen, deren Handhabung und Transport oder zum Beispiel zur maßgenauen Platzierung in Relation zu zumindest einem weiteren Bauteil bestimmt und eingerichtet sind, wird im Folgenden von Produktions- oder Werkzeugmaschinen gesprochen.

Die oben genannte Aufgabe wird erfindungsgemäß mittels eines Verfahrens zum Betrieb einer Produktions- oder Werkzeugmaschine mit den Merkmalen des Anspruchs 1 gelöst. Dabei ist Folgendes vorgesehen: Es werden Bewegungsdaten der jeweiligen Produktions- oder Werkzeugmaschine aufgenommen oder generiert. Zum Erhalt solcher Bewegungsdaten kommt zum Beispiel in Betracht, dass mittels der Produktions- oder Werkzeugmaschine in an sich bekannter Art und Weise ein Bauteil bearbeitet wird. Alternativ wird zum Erhalt solcher Bewegungsdaten die Produktions- oder Werkzeugmaschine ohne ein solches Bauteil, ansonsten aber wie bei einer Bearbeitung eines Bauteils verfahren. Eine nochmals weitere Alternative zum Erhalt von Bewegungsdaten besteht darin, dass mittels einer virtuellen Produktions- oder Werkzeugmaschine die Bearbeitung eines Bauteils simuliert wird. Aufgrund einer jeweiligen Spezifikation des Bauteils resultiert in einem sogenannten Werkstückkoordinatensystem (WKS) eine im Folgenden als Sollbahn bezeichnete Bewegungsbahn der Produktions- oder Werkzeugmaschine, genauer eine Sollbahn eines Angriffspunkts des jeweiligen Werkzeugs am jeweiligen Bauteil (Tool Center Point; TCP). Aufgrund der aufgenommenen Bewegungsdaten resultiert eine im Folgenden als Istbahn bezeichnete tatsächliche Bewegungsbahn der Produktions- oder Werkzeugmaschine (Bewegungsbahn des TCP). Gemäß dem hier vorgeschlagenen Ansatz ist nun vorgesehen, dass auf Basis der aufgenommenen Bewegungsdaten automatisch eine Idealisierung oder gewünschte Verschlechterung der resultierenden Bewegungsbahn vorgenommen wird. Aufgrund einer solchen Idealisierung oder Verschlechterung resultiert eine weitere (fiktive) Bewegungsbahn der Produktions- oder Werkzeugmaschine (Bewegungsbahn des TCP), die zur Unterscheidung als Vergleichsbahn bezeichnet wird. Diese wird zum Erhalt von Informationen über die Produktions- oder Werkzeugmaschine mit der Istbahn und/oder der Sollbahn verglichen.

Der Vorteil des hier vorgeschlagenen Ansatzes besteht darin, dass bei einer aufgrund einer Idealisierung resultierenden Vergleichsbahn und deren Vergleich zum Beispiel mit der Istbahn eine Information darüber erhältlich ist, wie exakt mit der jeweiligen Produktions- oder Werkzeugmaschine ein Bauteil bearbeitet werden kann. Die Istbahn und die Vergleichsbahn ergeben sich aufgrund der Bewegungsdaten der jeweiligen Produktions- oder Werkzeugmaschine und entsprechend fließen mechanische und kinematische Eigenschaften der Produktions- oder Werkzeugmaschine in die Istbahn und die Vergleichsbahn ein. Zum Beispiel gehen eine mit der Zeit nachlassende Steifigkeit der Maschinenachse oder eine mit der Zeit zunehmende Reibung einer Maschinenachse in die Bewegungsdaten und zumindest in die Istbahn ein. Bei einer zum Beispiel durch Glättung oder Filterung der Bewegungsdaten erhaltenen Vergleichsbahn sind solche Einflüsse reduziert und es lässt sich gewissermaßen eine Maschinenachse mit der ursprünglichen Steifigkeit und/oder der ursprünglichen Reibung simulieren. Ein Vergleich der Vergleichsbahn mit der Istbahn und/oder der Sollbahn liefert damit Erkenntnisse, wie zum Beispiel bestimmte unvermeidliche Verschleißeffekte die Qualität einer Be- oder Verarbeitung eines Bauteils mittels der Produktions- oder Werkzeugmaschine beeinflussen.

Die oben genannte Aufgabe wird auch mit einer Steuerungseinrichtung zur Steuerung und/oder Überwachung einer Produktions- oder Werkzeugmaschine gelöst, die nach dem Verfahren wie hier und im Folgenden beschrieben arbeitet und dazu Mittel zur Durchführung des Verfahrens umfasst. Das im Folgenden beschriebene Verfahren ist zur automatischen Ausführung bevorzugt in Form eines Computerprogramms realisiert.

Die Erfindung ist damit einerseits auch ein Computerprogramm mit durch einen Computer, nämlich die Steuerungseinrichtung der Produktions- oder Werkzeugmaschine, ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung einer Produktions- oder Werkzeugmaschine, in deren Speicher als Mittel zur Durchführung des Verfahrens und seiner Ausgestaltungen ein solches Computerprogramm geladen oder ladbar ist.

Das Computerprogramm ist zur Ausführung durch ein Computersystem, insbesondere eine zur Steuerung und/oder Überwachung einer Produktions- oder Werkzeugmaschine vorgesehene Steuerungseinrichtung, bestimmt. Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Für die weitere Beschreibung gilt zur Vermeidung unnötiger Wiederholungen, dass Merkmale und Details, die im Zusammenhang mit dem genannten Verfahren zum Betrieb einer Produktions- oder Werkzeugmaschine sowie eventueller Ausgestaltungen beschrieben sind, selbstverständlich auch im Zusammenhang mit und im Hinblick auf die zur Durchführung des Verfahrens eingerichtete Steuerungseinrichtung einer solchen Produktions- oder Werkzeugmaschine oder die Produktions- oder Werkzeugmaschine insgesamt und umgekehrt gelten. Entsprechend kann das Verfahren zum Betrieb einer Produktions- oder Werkzeugmaschine auch mittels einzelner oder mehrerer Verfahrensmerkmale fortgebildet sein, die sich auf von der Steuerungseinrichtung bzw. der Produktions- oder Werkzeugmaschine ausgeführte Verfahrensschritte beziehen. Genauso kann die Steuerungseinrichtung bzw. die Produktions- oder Werkzeugmaschine durch Mittel zur Ausführung von im Rahmen des Verfahrens ausgeführten Verfahrensschritten fortgebildet sein. Entsprechend gelten Merkmale und Details, die im Zusammenhang mit dem hier vorgeschlagenen Verfahren zum Betrieb einer Produktions- oder Werkzeugmaschine und eventueller Ausgestaltungen beschrieben sind, selbstverständlich auch im Zusammenhang mit und im Hinblick auf die zur Durchführung des Verfahrens bestimmte Steuerungseinrichtung sowie die zur Durchführung des Verfahrens eingerichtete Produktions- oder Werkzeugmaschine und jeweils umgekehrt, so dass bezüglich der Offenbarung zu den einzelnen Aspekten der Erfindung stets wechselseitig Bezug genommen wird bzw. werden kann.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens / der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Verfahrens erfolgt die Ermittlung der Vergleichsbahn automatisch dann, wenn sich bei einem Vergleich der Istbahn mit der Sollbahn, ggf. einem abschnittsweisen Vergleich, also einem Vergleich eines Abschnitts der Istbahn mit einem korrespondierenden Abschnitt der Sollbahn, eine einen vorgegebenen oder vorgebbaren Schwellwert überschreitende Abweichung ergibt. Eine solche Abweichung von der Sollbahn deutet darauf hin, dass die Be- oder Verarbeitung des jeweiligen Bauteils nicht mit der vorgesehenen Exaktheit erfolgen kann. Dann liegt es nahe, dass eine Wartung der Produktions- oder Werkzeugmaschine erforderlich sein kann. Ob eine solche Wartung notwendig oder sinnvoll ist, ergibt sich, wenn bei einem Vergleich einer automatisch erzeugten Vergleichsbahn mit der Sollbahn (oder einem abschnittsweisen Vergleich von Vergleichs- und Sollbahn) solche Abweichungen nicht mehr auftreten oder zumindest reduziert sind. Das Verfahren ermöglicht also ein bedarfsgerechtes Veranlassen und/oder Einplanen von Wartungs- oder Instandhaltungsmaßnahmen an einer Produktions- oder Werkzeugmaschine.

Bei einer weiteren Ausführungsform des Verfahrens ist vorgesehen, dass die Bewegungsdaten in Form von Daten zu einer Bewegungsbahn der Produktions- oder Werkzeugmaschine in einem Maschinenkoordinatensystem vorliegen, dass die Bewegungsbahn im Maschinenkoordinatensystem in eine Bewegungsbahn in einem Werkstückkoordinatensystem transformierbar ist und dass die Idealisierung oder Verschlechterung vor oder im Zusammenhang mit der Transformation der Bewegungsbahn im Maschinenkoordinatensystem in das Werkstückkoordinatensystem erfolgt. Dies trägt der Erkenntnis Rechnung, dass eine solche, grundsätzlich an sich bekannte Transformation vom Maschinenkoordinatensystem ins Werkstückkoordinatensystem (Koordinatentransformation) stark nichtlinear ist. Kleine Änderungen in der Bewegungsbahn im Maschinenkoordinatensystem können somit zu erheblichen Änderungen in der korrespondierenden Bewegungsbahn im Werkstückkoordinatensystem führen. Eine der Vergleichsbahn zugrunde liegende Idealisierung oder gewünschte Verschlechterung wird daher zweckmäßig im Werkstückkoordinatensystem durchgeführt, zumal die Effekte einer solchen Idealisierung oder Verschlechterung im Werkstückkoordinatensystem besser beobachtbar sind als im Maschinenkoordinatensystem.

Bei einer besonders bevorzugten Ausführungsform des hier vorgeschlagenen Verfahrens wird die Idealisierung oder Verschlechterung sukzessive für alle von der Produktions- oder Werkzeugmaschine umfassten Achsen durchgeführt und zwar nacheinander für jeweils genau eine Achse der Produktions- oder Werkzeugmaschine. Dann kann zum Beispiel die oben exemplarisch beschriebene Bewertung, ob bestimmte Verschleißerscheinungen vorliegen, für jede Achse einzeln durchgeführt werden, so dass sich schließlich genau ergibt, welche Achse oder welche Achsen von Verschleißerscheinungen oder dergleichen betroffen sind. Dies erlaubt eine sehr genaue Diagnose der jeweiligen Produktions- oder Werkzeugmaschine und davon ausgehend eine exakte Planung von Wartungs- oder Instandhaltungsmaßnahmen an einer Produktions- oder Werkzeugmaschine bis hin zu einer bedarfsabhängigen Ersatzteilbeschaffung.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Werkzeugmaschine,
- FIG 2: eine Schrittfolge zum Erhalt eines virtuellen Bearbeitungsergebnisses eines Betriebs einer Werkzeugmaschine und zugrunde liegender Bewegungsdaten,
- FIG 3: eine zum Beispiel bei einer Bearbeitung eines Bauteils mittels einer Werkzeugmaschine aufgenommene Bewegungsbahn der Werkzeugmaschine in einem sogenannten Maschinenkoordinatensystem,
- FIG 4: eine zu der Bewegungsbahn gemäß FIG 3 korrespondierende Bewegungsbahn der Werkzeugmaschine in einem sogenannten Werkstückkoordinatensystem, wobei die Bewegungsbahn im Werkstückkoordinatensystem aufgrund einer Koordinatentransformation der Bewegungsbahn gemäß FIG 3 resultiert,
- FIG 5: eine Schrittfolge gemäß FIG 2 mit einem in die Schrittfolge eingefügten Zwischenschritt zur Idealisierung oder Verschlechterung der Bewegungsdaten,
- FIG 6: eine bei einer Be- oder Verarbeitung eines Bauteils abzufahrende Sollbahn der Werkzeugmaschine,
- FIG 7: eine aufgrund der Bewegungsdaten resultierende Istbahn der Werkzeugmaschine,
- FIG 8: ein mittels einer Werkzeugmaschine gefertigtes Bauteil mit aufgrund von Abweichungen zwischen einer vorgesehenen Sollbahn und einer tätsächlichen Istbahn resultierenden Fehlern in der Oberfläche des Bauteils,
- FIG 9: das Bauteil gemäß FIG 8 ohne Fehler in dessen Oberfläche,
- FIG 10: eine aufgrund einer in dem Zwischenschritt (FIG 6) erfolgenden Idealisierung der Bewegungsdaten resultierende Vergleichsbahn, welche zwecks Diagnose der Werkzeugmaschine mit der Soll- und/oder Istbahn verglichen wird, und
- FIG 11: eine schematisch vereinfachte Darstellung einer Steuerungseinrichtung zur Ausführung des hier vorgeschlagenen Verfahrens beim Vergleich einer Vergleichsbahn mit der Sollbahn, wobei als Ergebnis des Vergleichs als Diagnose der Werkzeugmaschine eine Meldung generiert wird.

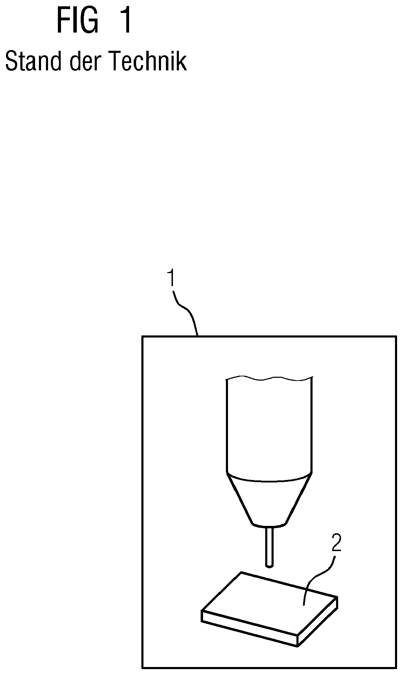

Die Darstellung in FIG 1 zeigt - schematisch stark vereinfacht - als Beispiel für eine Produktions- oder Werkzeugmaschine 1 der eingangs genannten Art eine grundsätzlich an sich bekannte Werkzeugmaschine 1 und ein mittels der Werkzeugmaschine 1 in grundsätzlich an sich bekannter Art und Weise hergestelltes oder bearbeitetes Bauteil 2.

Der Vorteil der hier vorgeschlagenen Neuerung besteht darin, dass ein mittels einer Werkzeugmaschine 1 mit drei, fünf oder mehr Achsen zu fertigendes Bauteil 2 virtuell, also im Rahmen einer Simulation, gefertigt und dessen Oberflächengüte beurteilt werden kann. Dabei werden typische Besonderheiten und Effekte berücksichtigt, die durch eine jeweilige Kinematik der Werkzeugmaschine 1 bedingt sind. Bei einer besonderen Ausführungsform des hier vorgeschlagenen Ansatzes können zum Beispiel Abhängigkeiten zwischen Effekten im Werkstückkoordinatensystem und auf Achsebene aufgedeckt und untersucht werden.

Aufgrund der geometrischen Gegebenheiten ist die mathematische Transformation zwischen den Bewegungen der einzelnen Achsen der jeweiligen Werkzeugmaschine 1 im sogenannten Maschinenkoordinatensystem (MKS) einerseits und der Bewegung des Werkzeugs im sogenannten Werkstückkoordinatensystem (WKS) stark nichtlinear. Kleine Änderungen/Bewegungen im Maschinenkoordinatensystem können sich somit stark und deutlich im Werkstückkoordinatensystem abbilden und umgekehrt. - Bei den Achsen der Werkzeugmaschine 1 handelt es sich in grundsätzlich an sich bekannter Art und Weise zum Beispiel um drei kartesische Achsen sowie eine oder zwei Rundachsen. Andere Achskonfigurationen sind ebenso denkbar.

Mechanische, maschinenbauliche und regelungstechnische Effekte, die das Ergebnis der Bearbeitung des jeweiligen Bauteils 2 (Werkstücks) beeinflussen, spielen sich typischerweise im Maschinenkoordinatensystem ab. Reibung, Umkehrspiel, Getriebefehler und dergleichen wirken auf Achsebene. Ebenso ist es mit dynamischen Größen wie Schleppabstand, Störsteifigkeit, Regelungsbandbreite usw. einer Achse. Erst beim Kontakt des jeweiligen Werkzeugs mit der Oberfläche des jeweiligen Bauteils 2 (Bauteil-/Werkstückoberfläche) werden die Auswirkungen auf den Bearbeitungsprozess und schließlich auf die Bauteiloberfläche, also im Werkstückkoordinatensystem, sichtbar.

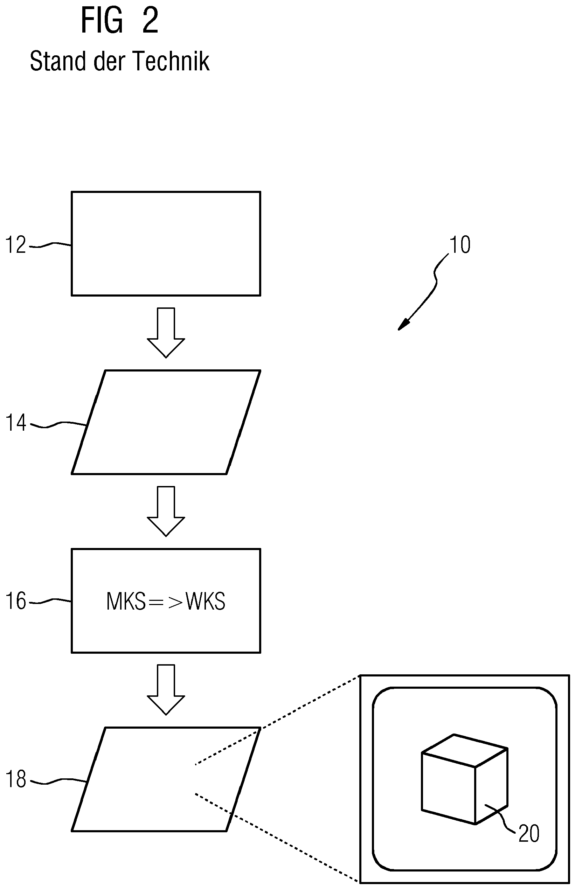

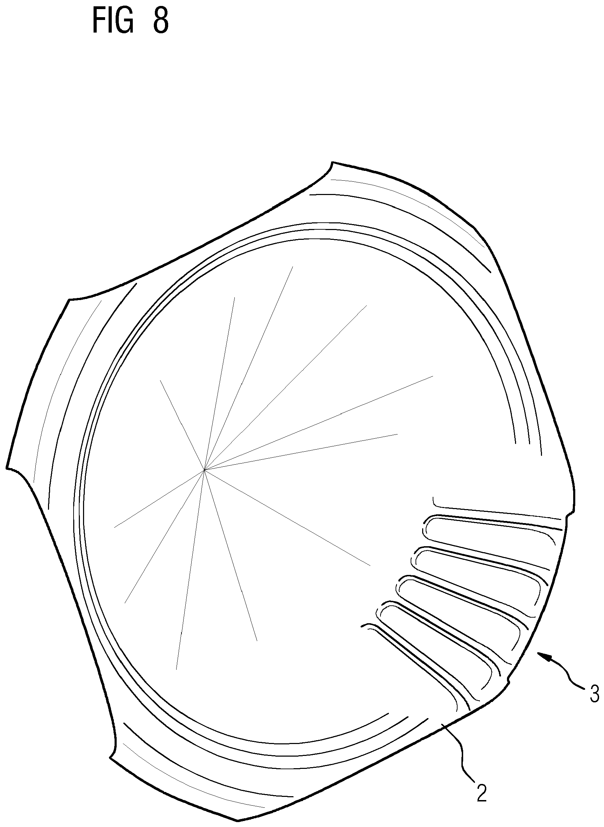

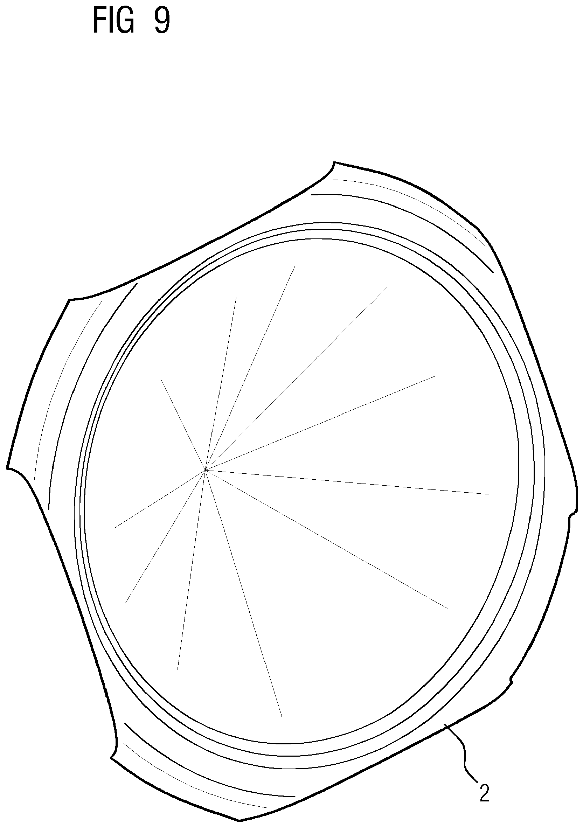

Zur Bewertung einer Güte einer Bearbeitung eines Bauteils 2 sowie einer Qualität des aufgrund der Bearbeitung resultierenden Bauteils 2 wird zum Beispiel gemäß dem in FIG 2 schematisch vereinfacht gezeigten Ablauf (Schrittfolge 10 zur Bewertung eines Ergebnisses einer Bearbeitung eines Bauteils 2 durch eine Werkzeugmaschine 1) vorgegangen:
- Zunächst (erster Schritt 12) wird eine Bewegung der Achsen der jeweiligen Werkzeugmaschine 1 (Maschinenachsen) veranlasst, simuliert oder virtualisiert. Dazu wird zum Beispiel das zu fertigende Bauteil 2 in üblicher Art und Weise auf einer Werkzeugmaschine 1 gefertigt. Alternativ wird bei einer realen Werkzeugmaschine 1 das Werkzeug wie bei einer Bearbeitung des Bauteils 2 verfahren, allerdings ohne dass sich ein Bauteil 2 oder dergleichen in der Werkzeugmaschine 1 befindet (Bearbeitung "in der Luft"). Als weitere Alternative erfolgt eine komplett virtuelle Bearbeitung des Bauteils 2. Jede der drei Alternativen liefert Bewegungsdaten der Werkzeugmaschine 1, also entweder Bewegungsdaten der realen Werkzeugmaschine 1 oder Bewegungsdaten der virtuellen Werkzeugmaschine. Diese Bewegungsdaten werden als Bewegungsverläufe der einzelnen Maschinenachsen (der realen Werkzeugmaschine 1 oder der virtuellen Werkzeugmaschine) aufgezeichnet und zwar im Maschinenkoordinatensystem. Optional werden im Maschinenkoordinatensystem andere messbare Größen oder daraus abgeleitete Größen aufgezeichnet, zum Beispiel eine Richtungsumkehr einer Maschinenachse.
- Das Ergebnis der tatsächlichen, simulierten oder virtuellen Bearbeitung im vorangehenden Schritt 12 sind zusammenfassend als Bewegungsverläufe 14 im Maschinenkoordinatensystem bezeichnete Daten.
- In einem weiteren Schritt (zweiter Schritt 16) werden die Bewegungsverläufe 14 im Maschinenkoordinatensystem mittels einer dafür notwendigen, an sich bekannten Transformationsvorschrift zur Koordinatentransformation in das Werkstückkoordinatensystem transformiert.
- Aufgrund dieser Koordinatentransformation ergeben sich Bewegungsverläufe 18 im Werkstückkoordinatensystem. Auf deren Basis kann das Bearbeitungsergebnis 20 zum Beispiel auf einem Computermonitor dargestellt und anschließend analysiert und bewertet werden, ohne dass ein Rohteil verbraucht wurde. Dafür wird das Bearbeitungsergebnis 20 oder ein Teil des Bearbeitungsergebnisses 20 zum Beispiel als geometrisch berechnete Oberfläche dargestellt (siehe FIG 8, FIG 9).

Von entscheidender Bedeutung für den Erhalt eines solchen Bearbeitungsergebnisses 20 ist die in der Darstellung in FIG 2 symbolisch mit dem Text "MKS => WKS" veranschaulichte Koordinatentransformation vom Maschinenkoordinatensystem in das Werkstückkoordinatensystem im zweiten Schritt 16. Hier erfolgt die Abbildung der Bewegungen der Maschinenachsen in ein zur Beurteilung des Bearbeitungsergebnisses 20 verwendbares Bezugssystem, nämlich das Werkstückkoordinatensystem. Eine Analyse im Maschinenkoordinatensystem ist dagegen nicht zielführend, denn aufgrund sogenannter Ausgleichsbewegungen bei aktiver Transformation (Verfahren der kartesischen Achsen beim Umorientieren des Werkzeugs) muss noch nicht einmal die räumliche Bahn der drei Linearachsen etwas mit dem Bearbeitungsergebnis 20 zu tun haben.

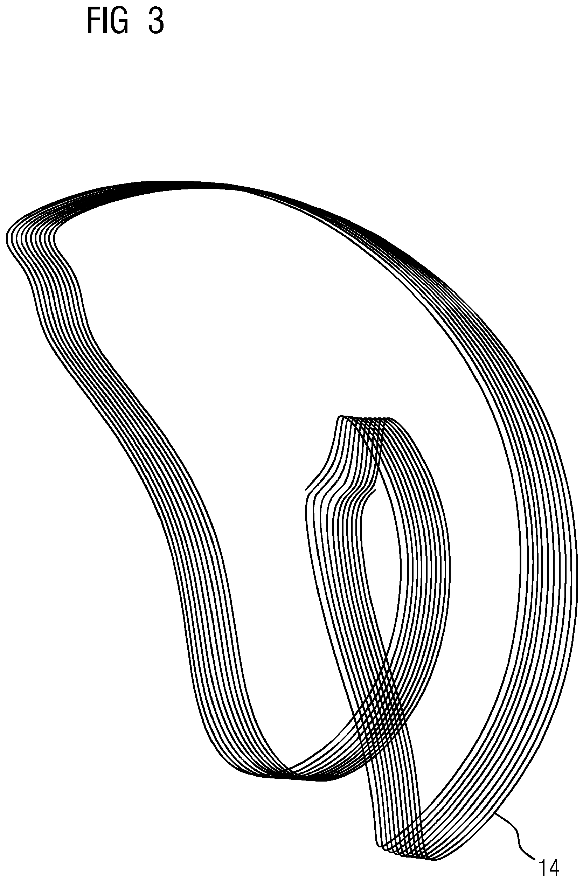

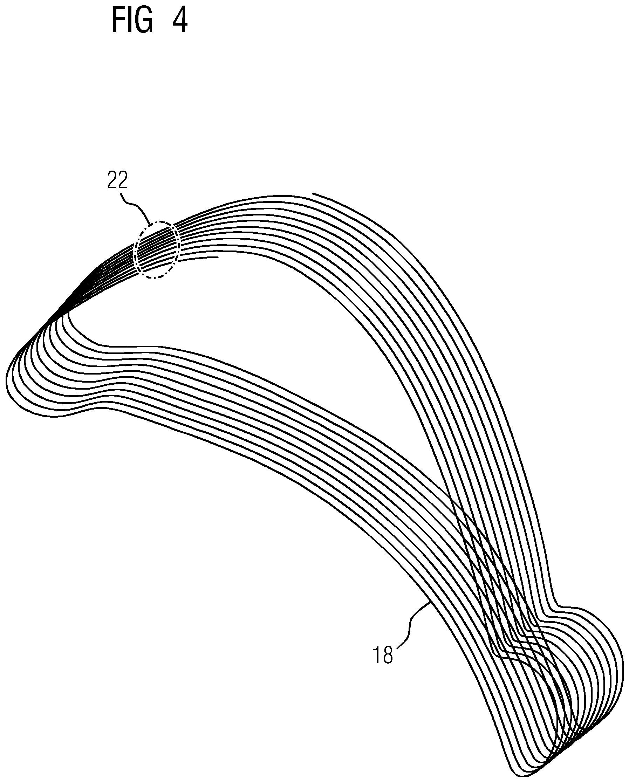

Die Darstellungen in FIG 3 und FIG 4 zeigen - nur für Illustrationszwecke - exemplarisch eine Bewegungsbahn 14 / einen Bewegungsverlauf 14 im Maschinenkoordinatensystem (MKS) bzw. eine zu der Bewegungsbahn 14 im Maschinenkoordinatensystem gehörige Bewegungsbahn 18 (Bewegungsverlauf 18) im Werkstückkoordinatensystem (WKS). Die Darstellung in FIG 4 ist das Ergebnis der im zweiten Schritt 16 (FIG 2) erfolgten Koordinatentransformation der Koordinaten der Bewegungsbahn 14 im Maschinenkoordinatensystem in das Werkstückkoordinatensystem.

Während die Darstellung der Bewegungsbahn 18 im Werkstückkoordinatensystem (FIG 4) das Bearbeitungsergebnis 20 erkennen lassen, ist die Form des gefertigten Werkstücks anhand der Bewegungsbahn 14 im Maschinenkoordinatensystem (FIG 3) nicht erkennbar. In der Darstellung im Werkstückkoordinatensystem (FIG 4) lassen sich damit Defekte im jeweiligen Bearbeitungsergebnis 20 räumlich der Bewegungsbahn 18 zuordnen. Damit ist es zum Beispiel möglich, einen für eine Beurteilung des jeweiligen Bearbeitungsergebnisses 20 relevanten oder repräsentativen Bereich 22 auszuwählen.

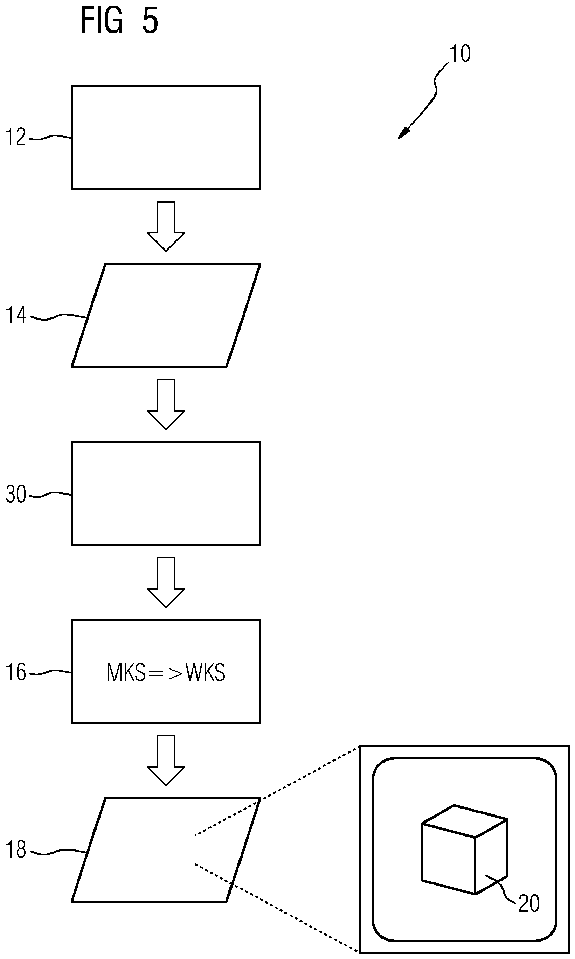

Die Darstellung in FIG 5 zeigt in schematisch vereinfachter Form den zentralen Aspekt der hier vorgeschlagenen Neuerung. Danach wird die Schrittfolge 10 zur Bewertung eines Bearbeitungsergebnisses 20 gemäß FIG 2 um einen Zwischenschritt 30 ergänzt. Dieser wird vor dem zweiten Schritt 16 eingefügt.

Mittels des Zwischenschritts 30 erfolgt eine definierte Veränderung der Achswerte. Die Veränderung der Achswerte kann einerseits in Form einer gezielten Idealisierung und anderseits in Form einer gezielten Verschlechterung erfolgen.

Bei einer gezielten Idealisierung werden störende Effekte vermieden. Zu den im Rahmen einer gezielten Idealisierung vermeidbaren störenden Effekten gehören zum Beispiel Reibung, Schwingungen, Lose, ein Nutrasten und so weiter. Dazu erfolgt zum Beispiel während des ersten Schritts 12 eine Simulation mit idealisierten Achsen und erst danach (im Zwischenschritt 30) zum Beispiel eine Hinzunahme von Reibung oder dergleichen. Alternativ kann während des ersten Schritts 12 eine Aufnahme von Signalen (zum Beispiel Lage und evtl. Ableitungen der Lagewerte und/oder Motorkraft, Motordrehmoment, Motorstrom etc. und ggf. deren Soll- und/oder Istwerte) vor und/oder hinter einem der Regler der Werkzeugmaschine 1 erfolgen. Bei einer eventuellen Umkehrlose einer Motorachse macht sich dies in Form einer unerwarteten Abweichung (Hysterese) zwischen dem Sollwert (vor dem Regler) und dem Istwert (hinter dem Regler) bemerkbar. Bei einer Idealisierung würde man den Effekt der Umkehrlose reduzieren, zum Beispiel indem der Sollwert als Istwert übernommen wird. Durch eine solche Übernahme des Sollwerts als Istwert sind alle störenden Effekte beseitigt (Idealisierung). Bei einer gezielten Verschlechterung werden bestimmte Effekte, zum Beispiel eine erhöhte Reibung, gezielt provoziert oder betont. Eine zusätzliche oder alternative Möglichkeit für eine Idealisierung oder auch eine gezielte Verschlechterung besteht darin, die Dynamik, mit welcher ein Istwert einem Sollwert folgt, gezielt zu beeinflussen, zum Beispiel mittels einer Verschiebung der Zeitachse oder durch Verwendung eines Verzögerungsglieds (PT1, PT2 etc.). Des Weiteren können durch Verwendung von Filtern (Tiefpass, Hochpass, Bandpass etc.) bestimmte Effekte, zum Beispiel Schwingungen im Antriebsstrang, gezielt überhöht werden (Verschlechterung) oder gezielt bedämpft werden (Idealisierung). Zum Beispiel können Resonanzschwingungen gezielt hervorgerufen oder verstärkt oder gezielt bedämpft oder eliminiert werden. Mit den aufgrund einer solchen Idealisierung oder gezielten Verschlechterung resultierenden Daten erfolgt eine erneute Ermittlung der Bewegungsverläufe 14 im Maschinenkoordinatensystem und mittels der oben genannten Koordinatentransformation die Ermittlung der zugehörigen Bewegungsverläufe 18 im Werkstückkoordinatensystem. Als Ergebnis dieser Berechnung ist die Auswirkung von Störungen in den Maschinenachsen auf der Werkstückoberfläche erkennbar / analysierbar.

Eine weitere Möglichkeit zur Untersuchung einer Werkzeugmaschine 1 nach dem hier vorgeschlagenen Ansatz besteht in einer Änderung der Aufspannsituation des jeweiligen Bauteils 2, denn es kann vorkommen, dass ein Bauteil 2 in einer ersten Aufspannsituation korrekt bearbeitet wird, während sich bei einer abweichenden, zweiten Aufspannsituation Fehler in der Bearbeitung des Bauteils zum Beispiel in Form von Fehlern auf der Werkstückoberfläche bemerkbar machen, zum Beispiel aufgrund unterschiedlicher Ausgleichbewegungen in den verschiedenen Aufspannpositionen. Hier besteht die Möglichkeit, bei einer Aufspannsituation, die zu solchen Fehlern geführt hat, eine Idealisierung einzelner Achsen anzuschließen, um auf diesem Wege die Achse oder die Achsen zu ermitteln, die in der jeweiligen Aufspannsituation zu der fehlerhaften Bearbeitung führen. Alternativ besteht die Möglichkeit, verschiedene Aufspannsituationen zu simulieren oder mit der Werkzeugmaschine 1 (mit oder ohne Werkzeug) abzufahren, um zu prüfen, ob die Aufspannsituation Einfluss auf das Ergebnis der Bearbeitung hat. Dann kann eine Idealisierung einzelner Achsen anschließen.

Auf diesem Wege lassen sich bequem und eindeutig Ursache und Wirkung zuordnen, nämlich zum Beispiel charakteristische Eigenschaften der Bewegungsbahn 18 im Werkstückkoordinatensystem zu einem Defekt am Bearbeitungsergebnis 20 und damit zu einem Defekt auf einer Oberfläche eines eventuell gefertigten Bauteils 2.

Die Auswertung kann rechnerisch unterstützt werden. Abweichungen zwischen Soll- und Ist-Geometrie lassen sich numerisch gut und zuverlässig ermitteln. Die Arbeit des Nutzers kann also durch eine automatisierte (bzw. halbautomatische und interaktive) Analyse erleichtert werden.

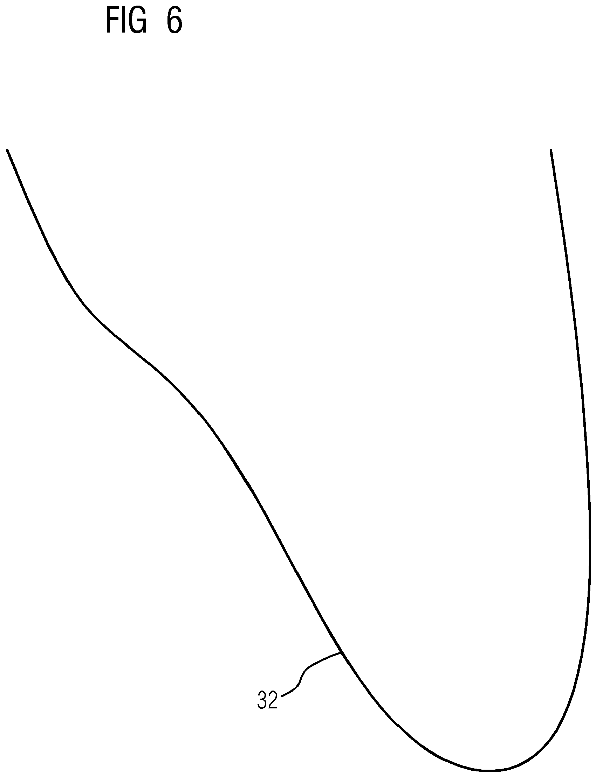

Die Darstellungen in FIG 6, FIG 7 und FIG 10 zeigen einen näher betrachteten Bereich 22 aus der Bewegungsbahn 18 im Werkstückkoordinatensystem.

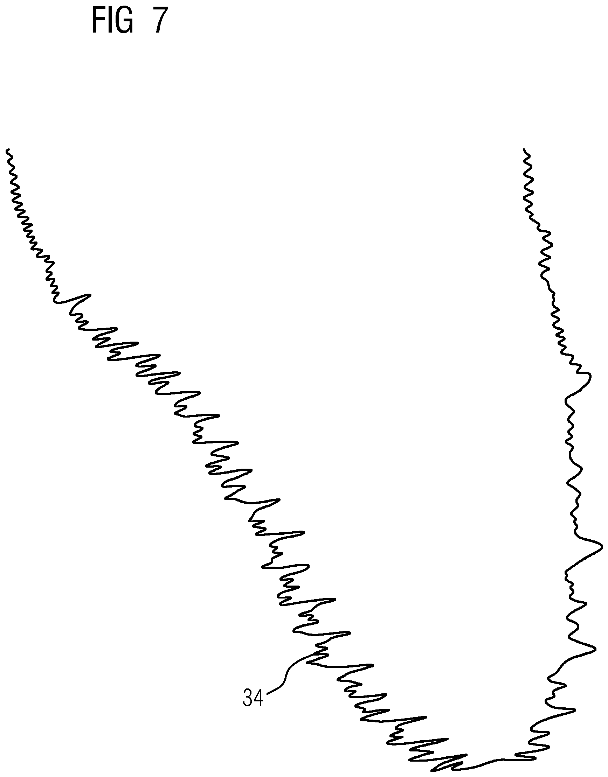

Die Darstellung in FIG 6 zeigt einen Ausschnitt aus dem Bewegungsverlauf einer aufgrund des von der Werkzeugmaschine 1 ausgeführten jeweiligen sogenannten Teileprogramms resultierenden Sollbahn 32. Die Darstellung in FIG 7 zeigt im Vergleich dazu in demselben Ausschnitt wie FIG 6 den Bewegungsverlauf einer gemessenen Istbahn 34. Erkennbar weicht die Istbahn 34 erheblich von der Sollbahn 32 ab, so dass davon auszugehen ist, dass die Oberfläche eines mittels einer der Istbahn 34 zugrunde liegenden Bewegungsverlaufs gefertigten Bauteils 2 nicht den Vorstellungen/Qualitätsanforderungen entspricht.

Die Darstellungen in FIG 8 und FIG 9 zeigen insoweit einen Teil einer exemplarisch zum Teil kegelförmig erhabenen Oberfläche eines Bauteils 2 (Blickrichtung von außen auf die Oberfläche des Kegels) und zwar einerseits (FIG 8) mit Fehlern 3 in der Oberfläche aufgrund einer nicht mit der Sollbahn 32 übereinstimmenden Istbahn 34 und andererseits (FIG 9) dasselbe Bauteil 2 ohne solche Abweichungen von der Sollbahn 32.

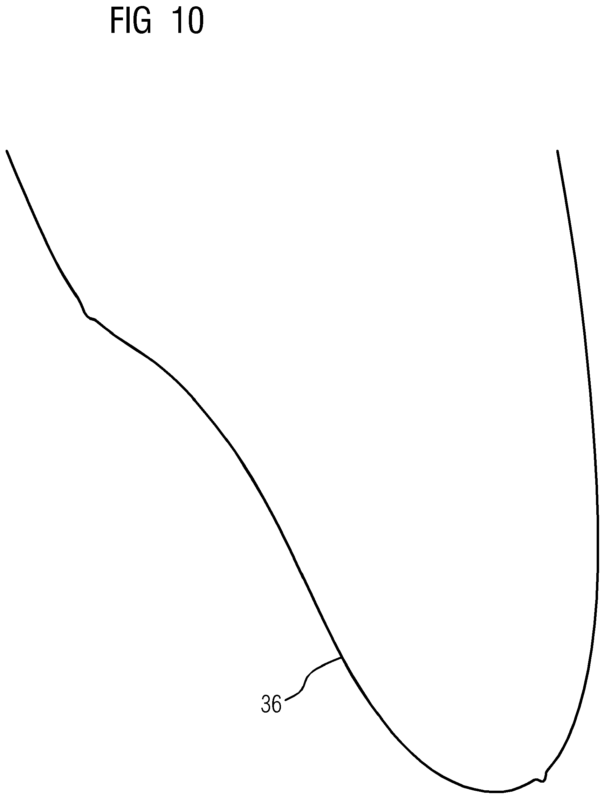

Die Darstellung in FIG 10 zeigt im selben Ausschnitt wie FIG 6 und FIG 7 den Bewegungsverlauf einer in dem Zwischenschritt 30 idealisierten Bewegungsbahn 36. Erkennbar stimmt die idealisierte Bewegungsbahn 36 besser mit der Sollbahn 32 überein. Daraus ist bereits erkennbar, dass die Abweichungen zwischen der Istbahn 34 und der Sollbahn 32 ihren Grund in der Mechanik der Werkzeugmaschine 1 haben müssen. Allgemein wird die im Zwischenschritt 30 erzeugte Bewegungsbahn 36, also unabhängig davon, ob dieser eine Idealisierung oder eine beabsichtigte Verschlechterung zugrunde liegt, als Vergleichsbahn 36 bezeichnet. Die Beschreibung des Ausführungsbeispiels wird allerdings - ohne Verzicht auf eine weitergehende Allgemeingültigkeit - am Beispiel einer Vergleichsbahn 36 in Form einer idealisierten Bewegungsbahn 36 fortgesetzt.

Zur besseren Eingrenzung der Fehlerursache ist bei einer besonderen Ausführungsform des hier vorgeschlagenen Ansatzes vorgesehen, dass in dem Zwischenschritt 30 sukzessive jeweils eine gezielte Idealisierung oder eine gezielte Verschlechterung bezüglich genau einer Maschinenachse erfolgt. Als Bewegungsdaten der nicht von einer solchen Idealisierung/Verschlechterung betroffenen Achsen werden die im ersten Schritt 12 aufgenommenen Bewegungsdaten 14 und deren Transformation in das Werkstückkoordinatensystem verwendet.

Die in FIG 10 beispielhaft gezeigte idealisierte Bewegungsbahn 36 ist das Ergebnis einer sich ausschließlich auf die sogenannte B-Achse (Rotation um die Y-Achse des kartesischen Koordinatensystems) beziehenden Idealisierung. Weil der in der Istbahn 34 erkennbare Fehler in der idealisierten Bewegungsbahn 36 nicht auftritt, kann damit anhand der exemplarischen idealisierten Bewegungsbahn 36 und der zugrunde liegenden Idealisierung nur für die B-Achse automatisch gefolgert werden, dass die Abweichung zwischen der Istbahn 34 und der Sollbahn 32 ihren Grund in der Mechanik (Reibung, Schwingungen, Lose, Nutrasten etc. - siehe oben) der B-Achse haben muss. - Selbstverständlich gilt dies bei einer Idealisierung für eine andere Achse entsprechend.

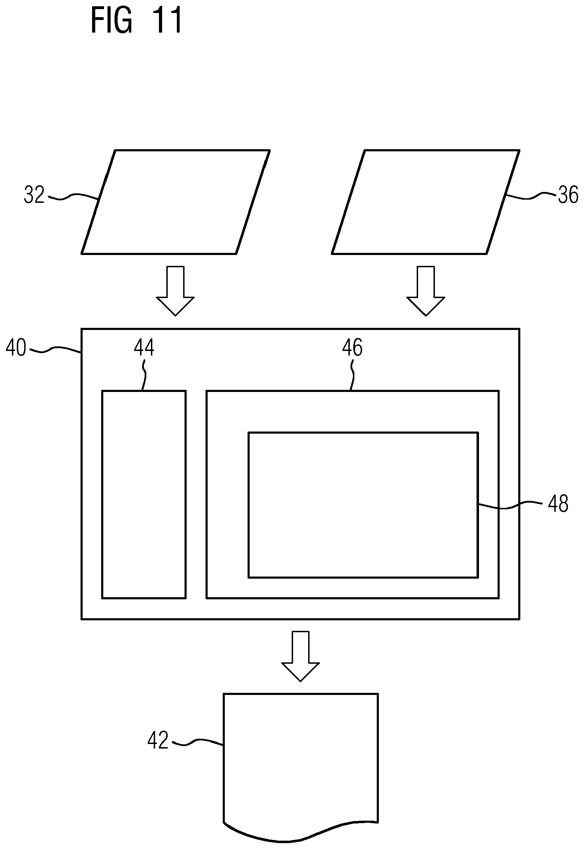

In der konkreten Realisierung ist für eine solche Eingrenzung der Fehlerursache vorgesehen, dass die im Zwischenschritt 30 erfolgende Idealisierung nacheinander für jede der Achsen der jeweiligen Werkzeugmaschine 1 und dann jeweils nur für genau eine Achse erfolgt, so dass sich bei einer fünfachsigen Maschine 1 entsprechend fünf idealisierte Bewegungsbahnen 36 ergeben, die einzeln mit der Sollbahn 32 verglichen werden. Eine Abweichung zwischen der jeweiligen idealisierten Bewegungsbahn 36 und der Sollbahn 32, zum Beispiel eine Abweichung oberhalb eines vorgegebenen oder vorgebbaren Schwellwerts, deutet auf ein Problem aufgrund der jeweiligen Achse hin und mittels einer den Vergleich zwischen der Sollbahn 32 und der idealisierten Bewegungsbahn 36 ausführenden Steuerungseinrichtung 40 (FIG 11) wird automatisch zum Beispiel eine Meldung 42 generiert, die einen Benutzer der Werkzeugmaschine 1 auf das jeweils identifizierte Problem hinweist.

Die Darstellung in FIG 11 zeigt die erwähnte Steuerungseinrichtung 40 in schematisch stark vereinfachter Form. Diese umfasst in an sich bekannter Art und Weise eine Verarbeitungseinheit 44 in Form von oder nach Art eines Mikroprozessors oder dergleichen sowie einen Speicher 46, in den als Steuerungsprogramm ein Computerprogramm 48 mit einer Implementation des hier beschriebenen Verfahrens geladen ist, welches beim Betrieb der Steuerungseinrichtung 40 durch deren Verarbeitungseinheit 44 ausgeführt wird. Die Darstellung zeigt, dass der Steuerungseinrichtung 40 für den Vergleich einer Sollbahn 32 und einer idealisierten Bewegungsbahn 36 entsprechende Eingangsdaten zugeführt werden. Als Ergebnis des auf Basis des Computerprogramms 48 automatisch erfolgenden Vergleichs wird zum Beispiel die erwähnte Meldung 42 generiert. Eine solche Meldung 42 ist ein Beispiel für eine im Rahmen des hier vorgeschlagenen Verfahrens mögliche automatische Diagnose der Werkzeugmaschine 1.

Bei der Steuerungseinrichtung 40 handelt es sich bevorzugt um die bei einer Werkzeugmaschine 1 ohnehin vorhandene Steuerungseinrichtung 40, welche den Produktivbetrieb der Werkzeugmaschine 1 steuert und überwacht. Die Steuerungseinrichtung 40 (oder alternativ eine weitere Steuerungseinrichtung mit einem vergleichbaren Funktionsumfang) führt auch die in FIG 5 gezeigten Schritte 12, 16 sowie speziell auch den Zwischenschritt 30 aus und das mittels der Steuerungseinrichtung 40 ausgeführte Computerprogramm 48 umfasst entsprechend Computerprogrammanweisungen zur Ausführung dieser Schritte 12, 16 und des Zwischenschritts 30.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Zum Beispiel ist der hier vorgeschlagene und am Beispiel einer Werkzeugmaschine erläuterte Ansatz genauso für einen Industrieroboter und allgemein für Bearbeitungsmaschinen mit mehreren Bewegungsachsen verwendbar.

Einzelne im Vordergrund stehende Aspekte der hier eingereichten Beschreibung lassen sich damit kurz wie folgt zusammenfassen: Angegeben werden ein Verfahren zum Betrieb einer Produktions- oder Werkzeugmaschine 1 sowie eine nach dem Verfahren arbeitende Vorrichtung, insbesondere eine nach dem Verfahren arbeitende Produktions- oder Werkzeugmaschine 1 oder eine zur Steuerung und/oder Überwachung einer Produktions- oder Werkzeugmaschine 1 bestimmte und ansonsten nach dem hier vorgeschlagenen Verfahren arbeitende Steuerungseinrichtung 40. Im Rahmen des Verfahrens erfolgt zum Erhalt von Bewegungsdaten zum Beispiel mittels der Produktions- oder Werkzeugmaschine 1 eine Bearbeitung eines Bauteils 2 in grundsätzlich an sich bekannter Art und Weise. Andere Möglichkeiten zum Erhalt von Bewegungsdaten sind weiter oben beschrieben. Aufgrund einer jeweiligen Spezifikation des Bauteils 2 resultiert eine Sollbahn 32 der Produktions- oder Werkzeugmaschine 1 und aufgrund der Bewegungsdaten resultiert eine Istbahn 34 der Produktions- oder Werkzeugmaschine 1. Eine Besonderheit des hier vorgeschlagenen Verfahrens besteht darin, dass auf Basis der Bewegungsdaten automatisch eine Idealisierung oder gewünschte Verschlechterung vorgenommen wird und aufgrund der Idealisierung oder Verschlechterung eine Vergleichsbahn 36 der Produktions- oder Werkzeugmaschine 1 resultiert. Diese Vergleichsbahn 36 kann zur Diagnose der Produktions- oder Werkzeugmaschine 1 mit der Istbahn 34 und/oder der Sollbahn 32 verglichen werden.

## Patentansprüche

1. Verfahren zum Betrieb einer Produktions- oder Werkzeugmaschine (1),
wobei aufgrund einer jeweiligen Spezifikation des Bauteils (2) eine Sollbahn (32) der Produktions- oder Werkzeugmaschine (1) und aufgrund von Bewegungsdaten der Produktions- oder Werkzeugmaschine (1) eine Istbahn (34) der Produktions- oder Werkzeugmaschine (1) resultiert,
wobei auf Basis der Bewegungsdaten automatisch eine Idealisierung oder gewünschte Verschlechterung vorgenommen wird und aufgrund der Idealisierung oder Verschlechterung eine Vergleichsbahn (36) der Produktions- oder Werkzeugmaschine (1) resultiert und
wobei die Vergleichsbahn (36) automatisch mit der Istbahn (34) und/oder der Sollbahn (32) verglichen wird.

2. Verfahren nach Anspruch 1, wobei zum Erhalt von Bewegungsdaten mittels der Produktions- oder Werkzeugmaschine (1) ein Bauteil (2) bearbeitet wird.

3. Verfahren nach Anspruch 1, wobei zum Erhalt von Bewegungsdaten die Produktions- oder Werkzeugmaschine (1) ohne ein solches Bauteil (2), ansonsten aber wie bei einer Bearbeitung eines Bauteils (2) verfahren wird.

4. Verfahren nach Anspruch 1, wobei zum Erhalt von Bewegungsdaten mittels einer virtuellen Produktions- oder Werkzeugmaschine (1) die Bearbeitung eines Bauteils (2) simuliert wird.

5. Verfahren nacheinem der vorangehenden Ansprüche, wobei die Ermittlung der Vergleichsbahn (36) automatisch dann erfolgt, wenn sich bei einem Vergleich zwischen der Sollbahn (32) und der Istbahn (34) eine einen vorgegebenen oder vorgebbaren Schwellwert überschreitende Abweichung ergibt.

6. Verfahren nach einem der vorangehenden Ansprüche, wobei die Bewegungsdaten in Form von Daten zu einer Bewegungsbahn (14) der Produktions- oder Werkzeugmaschine (1) in einem Maschinenkoordinatensystem vorliegen, wobei die Bewegungsbahn (14) im Maschinenkoordinatensystem in eine Bewegungsbahn (18) in einem Werkstückkoordinatensystem transformierbar ist und wobei die Idealisierung oder Verschlechterung vor oder im Zusammenhang mit der Transformation der Bewegungsbahn (14) im Maschinenkoordinatensystem in das Werkstückkoordinatensystem erfolgt.

7. Verfahren nach einem der vorangehenden Ansprüche, wobei die Idealisierung oder Verschlechterung sukzessive für alle von der Produktions- oder Werkzeugmaschine (1) umfassten Achsen durchgeführt wird und wobei sich die Idealisierung oder Verschlechterung dabei jeweils auf genau eine Achse der Produktions- oder Werkzeugmaschine (1) bezieht.

8. Computerprogramm (48) mit Programmcodemitteln, um alle Schritte von jedem beliebigen der Ansprüche 1 bis 7 durchzuführen, wenn das Computerprogramm (48) auf einer Steuerungseinrichtung (40) einer Produktions- oder Werkzeugmaschine (1) ausgeführt wird.

9. Computerprogrammprodukt mit Programmcodemitteln, die auf einem computerlesbaren Datenträger gespeichert sind, um das Verfahren nach jedem beliebigen der Ansprüche 1 bis 7 durchzuführen, wenn das Computerprogrammprodukt mittels einer Steuerungseinrichtung (40) einer Produktions- oder Werkzeugmaschine (1) ausgeführt wird.

10. Produktions- oder Werkzeugmaschine (1) mit Mitteln (40, 44, 48) zur Ausführung des Verfahrens nach einem der Ansprüche 1 bis 7.

11. Produktions- oder Werkzeugmaschine (1) nach Anspruch 10, mit einer eine Verarbeitungseinheit (44) und einen Speicher (46) umfassenden Steuerungseinrichtung (40), wobei in den Speicher (46) ein Computerprogramm (48) nach Anspruch 8 geladen ist, welches beim Betrieb der Produktions- oder Werkzeugmaschine (1) mittels der Verarbeitungseinheit (44) der Steuerungseinrichtung (40) ausgeführt wird.
